Europäisches Patentamt

European Patent Office

Office européen des brevets

(11) Veröffentlichungsnummer: **0 170 845**
**B1**

## EUROPÄISCHE PATENTSCHRIFT

(45) Veröffentlichungstag der Patentschrift:
**31.08.88**

(21) Anmeldenummer: **85107621.6**

(22) Anmeldetag: **20.06.85**

(51) Int. Cl.⁴: **F 16 L 47/02,** F 16 L 47/00,
F 16 L 41/04

(54) **Anbohrformstück zum Anschluss einer Abzweigleitung.**

(30) Priorität: **08.08.84 CH 3812/84**

(43) Veröffentlichungstag der Anmeldung:
**12.02.86 Patentblatt 86/7**

(45) Bekanntmachung des Hinweises auf die Patenterteilung:
**31.08.88 Patentblatt 88/35**

(84) Benannte Vertragsstaaten:
**AT BE CH DE FR GB IT LI LU NL SE**

(56) Entgegenhaltungen:
**FR-A-2 519 578**
**US-A-3 891 247**

(73) Patentinhaber: **GEORG FISCHER AKTIENGESELLSCHAFT, Mühlentalstrasse 105, CH- 8201 Schaffhausen (CH)**

(72) Erfinder: **Thalmann, Alfred, Brunngasse 71, CH- 8448 Uhwiesen (CH)**

## Beschreibung

Die Erfindung betrifft ein Anbohrformstück zum Anschluss einer Abzweigleitung, wie es im Oberbegriff von Anspruch 1 gekennzeichnet ist.

Bekannt sind derartige Anbohrformstücke, welche z. B. durch eine Schweissverbindung (CH-A-528 697 und FR-A-2 519 578) oder mittels einer Klemmverbindung (CH-A-464 620) mit der Rohrleitung verbunden sind. Hierbei ist der Abzweigstutzen relativ hoch am Anbohrstutzen angesetzt, was eine grosse Bauhöhe ergibt, wobei auch die Umlenkung des Durchflussmediums nicht strömungsgünstig ausgebildet ist.

Aufgabe der vorliegenden Erfindung ist die Schaffung eines Anbohrformstückes der eingangs genannten Art, welches bei einer geringen Bauhöhe einen strömungsgünstigen Durchfluss von der Rohrleitung zur Abzweigleitung ermöglicht.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Durch die kennzeichnenden Merkmale von Anspruch 1 wird die Bauhöhe des Anbohrformstückes wesentlich verkleinert, wobei gleichzeitig durch die gekennzeichnete Querschnittsabmessung der Kammer eine sofortige, strömungsgünstige Umlenkung des Mediums erreicht wird, wobei trotzdem eine Führung des Anbohrwerkzeuges bis nahe an die Bohrstelle möglich ist.

Durch die kennzeichnenden Merkmale der Ansprüche 2 und 3 wird die Umlenkung des Mediums in Richtung des Abzweigstutzens noch verbessert.

Wird das Anbohrformstück durch Schweissen mittels einer Heizdrahtmatte auf dem Rohr befestigt, so ist diese durch eine bogenförmige Verlegung der Heizdrähte an die zum Innenumfang des Sattelstückes offene Kammer angepasst und weist eine entsprechende Öffnung auf. Beim Anbohren der Rohrleitung ist deshalb ein Durchschneiden der Heizdrähte nicht erforderlich, wodurch der Schneidvorgang wesentlich vereinfacht wird. Durch die Befestigung der Heizdrahtmatte im Scheitelbereich des Sattelstückes wird ein Verrutschen der Heizdrahtmatte beim Aufsetzen und Verschweissen vermieden und die Heizdrahtmatte und das Sattelstück können beidseitig gleichmässig umfangsmässig fest an das Rohr gedrück werden, so dass eine einwandfreie Schweissverbindung entsteht.

Die Erfindung ist beispielsweise in der beiliegenden Zeichnung dargestellt und nachfolgend beschrieben.

Es zeigen:

Fig. 1 ein Anbohrformstück im Querschnitt,
Fig. 2 ein Schnitt entlang der Linie II - II von Fig. 1.
Fig. 3 eine Draufsicht auf die Heizdrahtmatte im flachgelegten Zustand und
Fig. 4 eine Ausführungsvariante von Fig. 1.

Das Anbohrformstück 1 weist einen Anbohrstutzen 2, einen Abzweigstutzen 3 und ein schalenförmig ausgebildetes Sattelstück 4 auf.

Der Anbohrstutzen 2 weist eine Bohrung mit Innengewinde 5 zur Aufnahme eines Anbohrwerkzeuges auf.

Der Abzweigstutzen 3 ist mit einer Bohrung 6 für das Durchflussmedium versehen, wobei der Abzweigstutzen 3 mit Bohrung 6 so am Sattelstück 4 angeordnet ist, dass die Verlängerungslinie 7 der untersten Umfangskante der Bohrung 6 unterhalb der Scheitellinie 9 des kreisförmigen Innenumfangs 8 des Sattelstückes 4 verläuft.

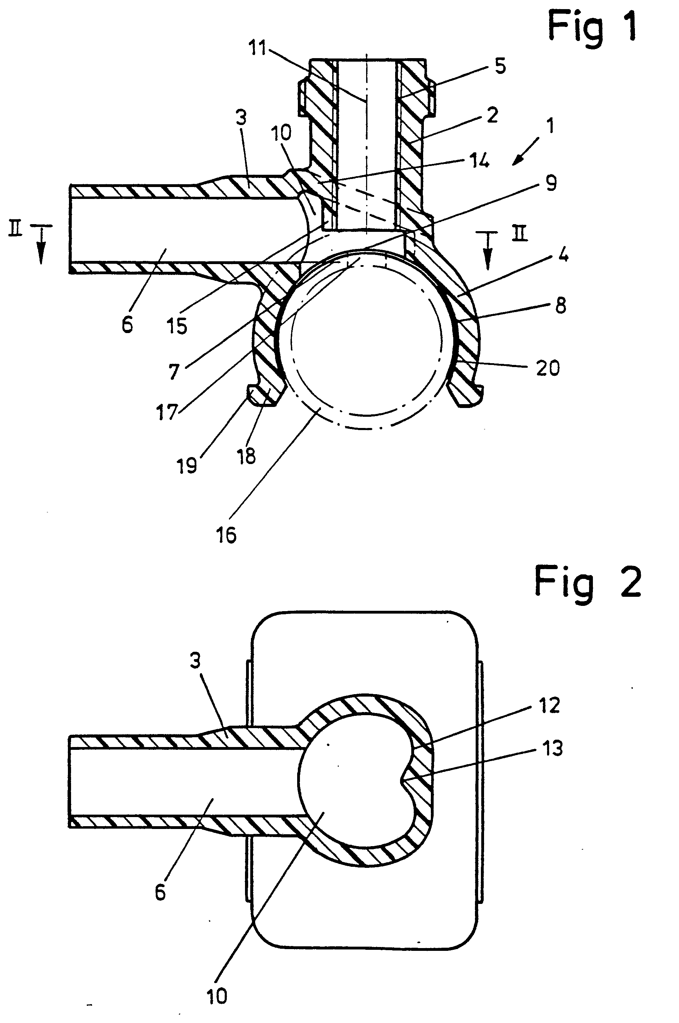

Zwischen dem Anbohrstutzen 2 und dem Abzweigstutzen 3 ist im Sattelstück 4 eine strömungsgünstig geformte, zum Innenumfang 8 des Sattelstückes 4, offene Kammer 10 angeordnet. Die Kammer 10 ist im Schnitt quer zur Anbohrachse 11 gemäss Fig. 2 im wesentlichen rund ausgebildet, wobei der runde Querschnitt gegenüber dem Abzweigstutzen 3 eine Abflachung 12 aufweist, an welcher eine auf die Achsmitte der Bohrung 6 gerichtete Strömungsnase 13 angeordnet ist.

Gemäss Fig. 1 ist die Kammer 10 ausgehend von der Oberkante der Bohrung 6 des Abzweigstutzens 3 durch eine geneigte, bis zur Abflachung 12 verlaufende, obere Kammerwand 14 begrenzt.

Der Anbohrstutzen 2 ragt mit seinem unteren Ende 15 etwas in die Kammer 10 hinein, wodurch das Innengewinde 5 einen geraden Abschluss aufweist und relativ nahe bis zur Anbohrstelle an die Rohrleitung herausreicht.

Nach dem Aufsetzen des Anbohrformstückes 1 auf eine Rohrleitung 16 und der Befestigung z. B. mittels einer Schweiss- oder Klemmverbindung wird eine Anbohrung 17 mittels eines Schneidwerkzeuges angebracht.

Vorzugsweise wird das vorgängig beschriebene Anbohrformstück aus Kunststoff im Spritzgussverfahren hergestellt und für die Erstellung von Abzweigleitungen bei Kunststoff-Rohrleitungssystemen verwendet.

Die Befestigung des Anbohrformstückes 1 auf dem Rohr 16 kann bei Kunststoff-Rohrleitungen durch eine Schweissverbindung z. B. mittels einer Heizdrahtmatte 20 erfolgen.

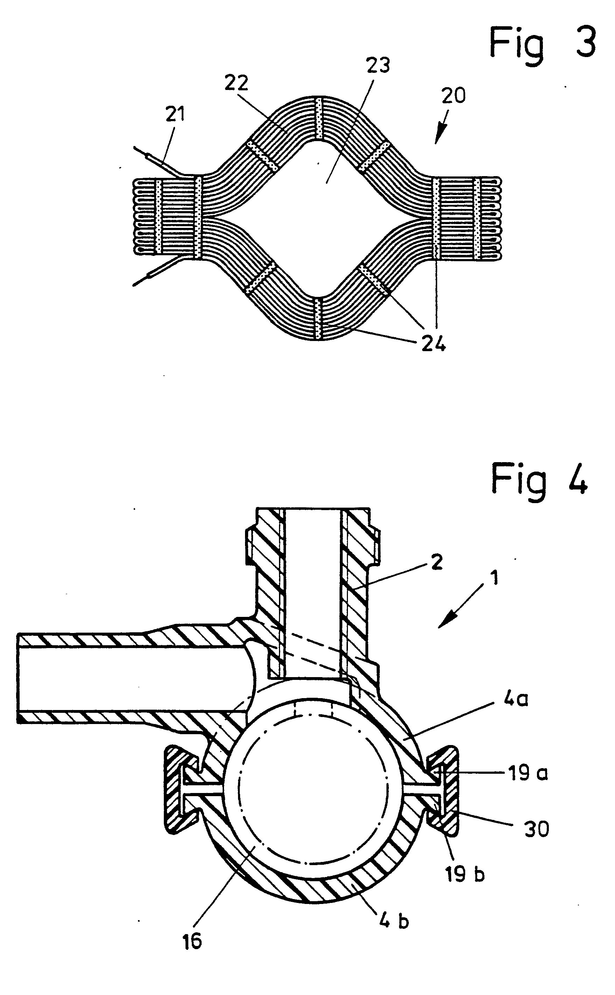

Fig. 3 zeigt eine flachgelegte Heizdrahtmatte 20, welche aus einer zick-zack-förmigen Anordnung eines mit Kunststoff ummantelten Heizdrahtes 21 besteht. Die aneinander liegenden Heizdrähte werden nach dem monofilen Wickeln einer rechteckförmigen Matte in einem, vorzugsweise mittigen Bereich in der Mattenebene so abgebogen, dass durch zwei bogenförmige Teile 22 eine Öffnung 23 entsteht. Die nebeneinander liegenden Heizdrähte 21 werden durch quer dazu verlaufende geschweisste Streifen 24 miteinander verbunden. Die Heizdrahtmatte 20 ist so in das Sattelstück 4 eingelegt, dass deren Öffnung 20 im Bereich der späteren Anbohrung 17 der Rohrleitung 16 zu liegen kommt. Vorzugsweise wird die Heizdrahtmatte 20 am Sattelstück 4 in deren Scheitellinie 9 beidseits der Kammer 10 durch eine Schweissung befestigt. Durch die monofile Wicklung der Heizdrahtmatte 20 werden Kurzschlüsse vermieden.

Wie aus Fig. 1 ersichtlich, wird das Anbohrformstück 1 mit dem Sattelstück 4 und der entsprechend gebogenen Heizdrahtmatte 20 radial auf die Rohrleitung 16 aufgesteckt. Da das Sattelstück 4 einen Umfangswinkel von mehr als 180°, vorzugsweise 210 bis 240° aufweist, sitzt es mit einer Schnappverbindung auf dem Rohr fest. An den beiden umfangsmässigen Endbereichen 18 weist das Sattelstück 4 Spannflansche 19 auf. Mittels einer an den Spannflanschen 19 angreifenden Spannvorrichtung wird das Sattelstück 4 tangential gegen das Rohr gedrückt, wobei der Anpressdruck auch bei dem nachfolgenden Schweissvorgang aufrechterhalten wird. Die tangentiale Kraft erzeugt eine am Umfang wirkende Spannung, welche die radial wirkende Pressung zwischen Sattelstück, Heizmatte und Rohr ergibt, wodurch während der Schweissung der nötige Schmelzdruck erzeugt wird. Nach dem Schweissvorgang wird durch ein Anbohrverkzeug die Anbohrung 17 in der Rohrleitung 16 erzeugt und die Abzweigleitung kann am Abzweigstutzen durch z. B. ebenfalls eine Schweissverbindung angeschlossen werden. Durch die ausserhalb der Kammeröffnung liegenden Heizdrähte ist deren Durchschneiden beim Anbohren nicht erforderlich, wodurch der Schneidevorgang vereinfacht wird.

Das durch die Anbohrung 17 austretende Durchflussmedium wird in der Kammer 10 strömungsgünstig in die Abzweigleitung umgelenkt.

Es besteht auch die Möglichkeit das Anbohrformstück mittels einer Klemmverbindung auf der Rohrleitung zu befestigen, wie dies in Fig. 4 dargestellt ist.

Das Sattelstück 4a des Anbohrformstückes 1 umfasst hierbei ca. eine Hälfte des Rohrumfanges und weist an den beiden umfangsmässigen Enden in Rohrlängsrichtung konisch verlaufende Spannflansche 19a auf. Zwischen dem Innenumfang des Anbohrformstückes 1 und dem Aussenumfang des Rohres 16 ist eine weiter nicht dargestellte Dichtung angeordnet, welche ausserhalb des Bereiches der Kammer eine dichte Verbindung gewährleistet. Auf der anderen Rohrhälfte der Rohrleitung 16 ist ein zweites Sattelstück 4b mit entsprechenden Spannflanschen 19b angeordnet, wobei die beiden Sattelstücke 4a, 4b mittels Verbindungskeilen 30 fest gegen die Rohrleitung 16 gespannt werden.

Die Klemmverbindung kann auch z.B. mittels Schrauben oder anderen Verbindungselementen hergestellt werden. Diese Befestigungsart mittels einer Klemmverbindung ist auch für Rohrleitungen und Anbohrformstücke aus Metall bzw. für unterschiedliche Materialien des Rohres und des Anbohrformstückes geeignet.

**Patentansprüche**

1. Anbohrformstück zum Anschluss einer Abzweigleitung an eine Rohrleitung (16) mit einem radial auf die Rohrleitung aufsetzbaren und befestigbaren schalenförmigen Sattelstück (4), welches einen Anbohr- und Abzweigstutzen (2, 3) mit Bohrungen (5, 6) aufweist, wobei zwischen dem Anbohrstutzen (2) und dem Abzweigstutzen (3) im Sattelstück (4) eine, zum Innenumfang (8) des Sattelstückes (4) offene Kammer (10) angeordnet ist, dadurch gekennzeichnet, dass die Verlängerungslinie (7) der untersten Umfangskante der Abzweig-Bohrung (6) unterhalb der Scheitellinie (9) des Innenumfangs (8) des Sattelstückes (4) verläuft, wobei die Kammer (10) und deren Öffnung zum Innenumfang des Sattelstückes (4) im Schnitt quer zur Anbohrachse (11) eine grössere Querschnittsfläche aufweist als die der Bohrung (5) im Anbohrstutzen (2).

2. Anbohrformstück nach Anspruch 1, dadurch gekennzeichnet, dass die Kammer (10) im Schnitt quer zur Anbohrachse (11) im wesentlichen rund ausgebildet ist und gegenüber dem Abzweigstutzen (3) eine Abflachung (12) mit einer Strömungsnase (13) aufweist.

3. Anbohrformstück nach einem der Ansprüche 1 oder 2, dadurch gekennzeichnet, dass die Kammer (10) quer zur Rohrleitungsachse ausgehend vom Abzweigstutzen (3) durch eine geneigte Kammerwand (14) begrenzt ist.

4. Anbohrformstück nach einem der Ansprüche 1 bis 3, dadurch gekennzeichnet, dass das Anbohrformstück (1) mittels einer eine Heizdrahtmatte (20) aufweisenden Schweissverbindung auf der Rohrleitung befestigbar ist.

5. Anbohrformstück nach Anspruch 4, dadurch gekennzeichnet, dass die Heizdrahtmatte (20) durch eine bogenförmige Verlegung der Heizdrähte (21) im Bereich der Kammer (10) eine Öffnung (28) aufweist.

6. Anbohrformstück nach Anspruch 5, dadurch gekennzeichnet, dass die Heizdrahtmatte (20) am Sattelstück (4) im Scheitelbereich beidseits der Kammer (10) befestigt ist.

7. Anbohrformstück nach einem der Ansprüche 1 bis 6, dadurch gekennzeichnet, dass das Sattelstück (4) einen auf die Rohrleitung (16) aufsetzbaren Umfangsbereich mit einem Umfangswinkel von maximal 240° aufweist.

8. Anbohrformstück nach Anspruch 7, dadurch gekennzeichnet, dass an den beiden umfangsmässigen Endbereichen (18) des Sattelstückes (4) Spannflansche (19) zum Einhängen einer Spannvorrichtung während dem Schweissvorgang angeordnet sind.

9. Anbohrformstück nach einem der Ansprüche 1 bis 3, dadurch gekennzeichnet, dass das Anbohrformstück mit einer Klemmverbindung auf der Rohrleitung bestigbar ist.

**Claims**

1. Shaped boring piece for connecting a branch line to a pipeline (16), having a dish-shaped saddle piece (4) which can be placed on and secured radially to the pipeline, which has a boring and branch connection piece (2, 3) with bores (5, 6), and between the boring connection piece (2) and the branch connection piece (3) in the saddle piece (4) there is arranged a chamber (10) open towards the inner periphery (8) of the saddle piece (4), characterised in that the extension line (7) of the lowermost peripheral edge of the branch bore (6) extends below the apex line (9) of the inner periphery (8) of the saddle piece (4), and the chamber (10), and its opening towards the inner periphery of the saddle piece (4) has a larger cross-sectional area in a section transverse to the boring axis (11) than that of the bore (5) in the boring connection piece (2).

2. Shaped boring piece according to claim 1, characterised in that the chamber (10) is of substantially circular construction in a section transverse to the boring axis (11) and opposite the branch connection piece (3) has a flattened region (12) with a flow nose (13).

3. Shaped boring piece according to one of claims 1 or 2, characterised in that the chamber (10) is delimited by an inclined chamber wall (14) transverse to the pipeline axis in the direction proceeding from the branch connection piece (3).

4. Shaped boring piece according to one of claims 1 to 3, characterised in that the shaped boring piece (1) can be secured to the pipeline by means of a welded joint having a heated wire mat (20).

5. Shaped boring piece according to claim 4, characterised in that the heated wire mat (20) has an opening (23) as a result of the arcuate displacement of the heating wires (21) in the region of the chamber (10).

6. Shaped boring piece according to claim 5, characterised in that the heated wire mat (20) is secured on the saddle piece (4) in the apex region on both sides of the chamber (10).

7. Shaped boring piece according to one of claims 1 to 6, characterised in that the saddle piece (4) has a peripheral region which can be placed on to the pipeline (16) with a circumferential angle of at most 240°.

8. Shaped boring piece according to claim 7, characterised in that on both circumferential end areas (18) of the saddle piece (4) clamping flanges (19) are arranged for attachment of a clamping device during the welding process

9. Shaped boring piece according to one of claims 1 to 3, characterised in that the shaped boring piece can be secured on the pipeline with a clamping joint.

**Revendications**

1. Pièce de piquage moulée, pour raccorder une conduite de branchement à une canalisation tubulaire (16), comportant une pièce de chevauchement ou selle (4) en forme de coquille qui peut être rapportée radialement et fixée sur la canalisation tubulaire, et présente une tubulure de percement (2) ainsi qu'une tubulure de branchement entre lesquelles est agencée, dans la pièce de chevauchement, une chambre (10) ouverte sur la périphérie intérieure (8) de la pièce de chevauchement (4), caractérisée par le fait que la ligne de prolongement (7) de la génératrice la pluss basse de l'alésage de branchement (6) passe en dessous de la génératrice (9) la plus haute de la périphérie intérieure (8) de la pièce de chevauchement (4), la chambre (10) et son ouverture sur la périphérie intériure de la pièce de chevauchement (4) présentant, en coupe transversale à l'axe de percement (11), une section droite plus grande que celle de l'alésage (5) dans la tubulure de percement (2).

2. Pièce de piquage moulée selon revendication 1, caractérisée par le fait qu'en coupe transversale à l'axe de percement (11), la chambre (10) est de forme sensiblement ronde et présente, en vis-à-vis de la tubulure d'embranchement (3), un méplat (12) doté d'un bec découlement (13).

3. Pièce de piquage moulée selon l'une des revendications 1 ou 2, caractérisée par le fait que la chambre (10) est délimitée transversalement à l'axe de la canalisation tubulaire par une paroi inclinée (14) partant de la tubulure de branchement (3).

4. Pièce de piquage moulée selon l'une des revendications 1 à 3, caractérisée par le fait que la pièce de piquage moulée (1) peut être fixée à la canalisation tubulaire au moyen d'une liaison par soudage présentant un mat de fils chauffants (20).

5. Pièce de piquage moulée selon revendication 4, caractérisée par le fait que le mat de fils chauffants (20) présente, grâce à une disposition en forme d'arc des fils chauffants (21), une ouverture (23) dans la région de la chambre (10).

6. Pièce de piquage moulée selon revendication 5, caractérisée par le fait que le mat de fils chauffants (20) est fixé à la pièce de chevauchement (4), dans la région du sommet de celle-ci, des deux côtés de la chambre (10).

7. Pièce de piquage moulée selon l'une des revendications 1 à 6, caractérisée par le fait que la pièce de chevauchement (4) présente une zone périmétrique occupant un arc de 240° au maximum, applicable sur la canalisation tubulaire (16).

8. Pièce de piquage moulée selon revendication 7, caractérisée par le fait que des brides de serrage (19) pour l'accorchage d'un dispositif de serrage pendant le soudage sont agencées sur les deux régions pérmétriquement terminales (18) de la pièce de chevauchement (4).

9. Pièce de piquage moulée selon l'une des revendications 1 à 3, caractérisée par le fait que la pièce de piquage moulée peut être fixée à la canalisation tubulaire par une liaison par serrage.

0 170 845

Fig 1

Fig 2

Fig 3

Fig 4